# EUROPEAN PATENT APPLICATION

(11) **EP 2 778 440 A1**
(43) Date of publication of application: **17.09.2014**
(21) Application number: 14158087.8
(22) Date of filing: 06.03.2014
(51) Int. Cl.: F16B 2/00, A43B 5/14, B62M 3/08, F16B 5/07, F16B 21/00

(54) **Releasable connection system**

(30) Priority: 14.03.2013 US 201361782106 P
(71) Applicant: Stone Age Equipment Inc., Redlands, CA 92373 (US)
(72) Inventor: Cole, Charles, Redlands, CA, 92373 (US)
(74) Representative: Wegner, Hans

(57) **Abstract**

A connection system having at least one male engagement component (30) configured to engage with a female engagement component (40) is provided. The male engagement component is configured to interact with the female engagement component so that when pressure is applied, the at least one male engagement component embeds into the material of the female engagement component and generates sufficient friction to lock the relative positioning of the two components in at least one direction.

## Description

### CROSS REFERENCE TO RELATED APPLICATIONS

This application claims the benefit of U.S. Provisional Application No. 61/782,106 filed March 14, 2013 and titled "Releasable Connection System" and is a continuation-in-part application of U.S. Patent Application Serial No. 13/546,522 filed July 11, 2012 and titled "Releasable Connection System," the contents of both of which are incorporated herein by reference.

### FIELD OF THE INVENTION

The invention generally relates to components for use with a releasable connection system.

### BACKGROUND OF THE INVENTION

In a variety of different applications it may be desirable to employ a releasable connection system that is capable of providing a firm connection between two objects while still allowing the relative position of the two objects to be adjusted. Specifically, there are many applications (such as sporting applications, the placement of transportable goods in a container or vehicle, the storage of goods in a warehouse or private storage unit, and so forth) where it is desirable for two objects to be connected at a certain position for a certain amount of time without slipping or sliding and for there to be a relatively easy way of fixing and releasing the connection. Having a fast and reliable connection is especially desirable in a dynamic environment, such as a sports environment where quick release of a connection is needed for safety and/or performance reasons.

As one of many examples, with certain activities, such as cycling, it is sometimes desirable for the outsole of a shoe to releasably attach to another structure, such as the pedal of a bike. For example, a cyclist is able to generate more power if the pedal is connected to the shoe so that the cyclist is able to transmit power to the crank via the pedals throughout the entire pedaling cycle. The connection of the shoe to the pedal also provides more stability in certain situations.

There are known ways of releasably attaching a shoe with a pedal, such as cage-type construction pedals (where the shoe is received snuggly within a cage of the pedal) or clip-in (also referred to as clipless) pedals. With a clip-in pedal, a cleat on the outsole of the shoe clicks into a receptacle located on the top surface of the clip-in pedal when the cleat is aligned a particular way with respect to the receptacle. Once clicked into place, the shoe is attached to the pedal and the cleat can only be disengaged from the receptacle of the pedal when the shoe is turned a certain way. With clip-in pedals, clicking the cleat into place within the pedal and releasing the shoe from the pedal can be difficult and therefore dangerous.

### SUMMARY OF THE INVENTION

Disclosed is a male engagement component configured to interact with a female engagement component as part of a releasable connection system. The male engagement component is configured so that a predetermined amount of friction is generated between the male engagement component and the female engagement component when the male engagement component interacts with the female engagement component. In this way, a predetermined amount of pressure/force may be required to engage and/or disengage the male engagement component and the female engagement component. In some cases, predetermining the amount of friction means maximizing, minimizing or otherwise optimizing the amount of friction.

In some embodiments, the male engagement component is configured so that the material of the female engagement component flows around the male engagement component to optimize a contact area between the two components, thus optimizing the amount of friction generated between the two components. In some cases, optimizing the contact area and the amount of friction generated means minimizing the contact area and hence the amount of friction. In other cases, optimizing the contact area and the amount of friction generated means maximizing the contact area and hence the amount of friction, and optimizing the contact area and the amount of friction generated sometimes means predetermining the contact area and the amount of friction generated so that the contact area and friction generated is somewhere between the maximum and minimum levels.

In some embodiments, the male engagement component is used with a female engagement component to releasably connect a fixed device (for example, but not limited to, the pins on a plate or on a pedal of a bike) to a movable device (for example, but not limited to, a shoe, glove, container, box or other transportable or storable good). In some embodiments, the male engagement component is used to releasably connect a shoe to another component, such as a pedal of a bike.

The terms "invention," "the invention," "this invention" and "the present invention" used in this patent are intended to refer broadly to all of the subject matter of this patent and the patent claims below. Statements containing these terms should not be understood to limit the subject matter described herein or to limit the meaning or scope of the patent claims below. Embodiments of the invention covered by this patent are defined by the claims below. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to the entire specification of this patent, all drawings and each claim.

### BRIEF DESCRIPTION OF THE FIGURES

Illustrative embodiments of the present invention are described in detail below with reference to the following drawing figures:
FIG. 1 is a schematic showing the insertion of an elongate object into a female engagement component to create a void.
FIG. 2 is a schematic illustrating a profile of the void of FIG. 1.
FIG. 3 is a perspective view of a male engagement component according to one embodiment.
FIG. 4 is a perspective view of a male engagement component according to another embodiment.
FIG. 5 is a perspective view of a plurality of the male engagement components of FIG. 3.
FIG. 6 is a perspective view of a plurality of the male engagement components of FIG. 4.
FIG. 7 is a two-dimensional schematic of a male engagement component according to one embodiment.
FIG. 8 is a two-dimensional schematic of a male engagement component according to one embodiment.
FIG. 9 is a three-dimensional schematic of a male engagement component according to one embodiment.
FIG. 10 is a three-dimensional schematic of a male engagement component according to one embodiment.
FIG. 11 is a two-dimensional schematic of a male engagement component according to one embodiment.
FIG. 12 is a three-dimensional schematic of a male engagement component according to one embodiment.
FIG. 13 illustrates two male engagement components having similar coefficients of friction.
FIG. 14 illustrates two-dimensional schematics of male engagement components according to some embodiments.
FIG. 15 illustrates a male engagement component in the form of a pin according to one embodiment.
FIG. 16 illustrates a male engagement component in the form of a pin according to another embodiment.
FIG. 17 illustrates a male engagement component in the form of a pin according to yet another embodiment.
FIG. 18 illustrates several male engagement components in the form of rails according to other embodiments.
FIGS. 19-22 illustrate one embodiment of a male engagement component as it engages with a female engagement component of one embodiment.
FIGS. 23A-23B illustrate two known fractals.

### DETAILED DESCRIPTION OF THE INVENTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

Disclosed is a male engagement component that may be used with a female engagement component as part of a releasable connection system for use in a variety of applications. For example, the male engagement component described herein may be used in the transportation industry, the retail industry, the storage or warehousing industry, the furniture industry, the sporting industry, the manufacturing and containment of manufacturing components and flooring, or any other desired application or industry. With respect to the transportation industry, the male engagement component may be used with a connection system to, for example, facilitate loading and unloading and/or transporting of transportable goods or cargo. More particularly, as described below, the goods to be transported may be housed within a container or box or on a rack having a bottom surface that faces and is configured to interact with a surface of the transporting vehicle (such as but not limited to a plane, ship, truck, forklift, automobile, etc.). For example, the bottom surface may have a female engagement component that includes a material in which a male engagement component associated with a device/plate on the flooring surface is capable of engaging, as described below.

With respect to the retail industry, a male engagement component may be used with a connection system to, for example, facilitate the display of retail items on shelves or in display windows. With respect to the storage industry, a male engagement component may be used with a connection system to, for example, facilitate loading and unloading and/or transporting of boxes or other storable goods. With respect to the furniture industry, for example, a male engagement component may be used with a connection system to facilitate the movement of furniture along a surface.

With respect to the sporting industry, for example, a male engagement component may be used with a connection system to facilitate connection between a shoe and an exercise machine such as a stepper, cross trainer, rowing machine or the like, a cycling shoe and a flat pedal (such as a bike pedal without a clip system, either with a substantially flat contact surface, or with pins attached to the contact surface), a boat shoe and a boat deck or surface, a horseback riding shoe and a stirrup, a glove and a baseball bat, a climbing glove and a climbing structure, and so forth.

In essence, the disclosed male engagement component may be part of a connection system for use in any application, including both commercial and private applications, where it is desirable to selectively limit movement between a fixed object and a movable object while also permitting easy adjustment of the relative positions of the two objects and easy fixing and release of the connection between the two objects. As a few non-limiting examples, the fixed object might be a piece of sporting equipment such as a bike, a bat, or a boat and the movable object might be a shoe, a glove, or a piece of apparel.

The disclosed male engagement component is configured to interact with a female engagement component. In some embodiments, the male engagement component may be a pin, screw, spike, post, projection, protrusion, rail, or any other suitable structure. The male engagement component may be fixed with respect to a surface or structure (such as a plate or pedal, etc.) or may be connectable to any surface or structure. The male engagement component is dimensioned and otherwise configured to generate a desired, predetermined amount of friction when sufficient force is applied to engage the male engagement component with a female engagement component. In this way, the male engagement component is profiled to generate friction that establishes and maintains a connection between the male engagement component and the female engagement component until the force engaging the female engagement component with the male engagement component is no longer applied. In some embodiments, the male engagement component is profiled to generate friction that establishes and maintains a connection between the male engagement component and the female engagement component until the force engaging the female engagement component with the male engagement component is no longer applied and, in some cases, a second force sufficient to overcome the generated friction is applied. In some embodiments, the second force may be applied by lifting one of the two components away from the other to overcome the generated friction, depending on the characteristics of the two components. For example, as discussed below, the female engagement component may be formed of a material having certain properties. If the material has, for example, a relatively low resilience/slow rebound, a greater second (in some cases lifting) force may be required to overcome the generated friction as compared with a material that has a higher resilience/faster rebound.

In some embodiments, the male engagement component is profiled so that the second force needed to overcome the generated friction is a desired, predetermined amount. For example, the male engagement component may be profiled so that the second force needed to overcome the generated friction is not as high in certain directions as it is in other directions. In the context of a bike shoe/bike pedal, for example (and as explained in more detail below), the male engagement component may be profiled so that the second force needed to release a male engagement component from the female engagement component is low in a certain range of angles (for example, but not limited to, angles around 90 degrees), but is relatively high in other ranges of angles (such as angles around 0 degrees when it is not likely desired that the two components be released) to help prevent injury.

In some embodiments, as disclosed in U.S. Application Serial No. 13/546,522 filed July 11, 2012, the contents of which are incorporated herein, the female engagement component is a material having a low rebound elasticity, a high viscoelasticity, and a hardness that is low enough to allow a desired amount of deformation and hard enough to impart a desired amount of stability. In some embodiments, the material of the female engagement component may have a rebound elasticity that is less than approximately 20%, an elongation that is more than approximately 600%, and in some embodiments is more than 900%, and a hardness that is between approximately 40 Shore A and approximately 70 Shore A. In some embodiments, the hardness is between approximately 45 Shore A and approximately 60 Shore A, and in some embodiments is between approximately 50 Shore A and approximately 55 Shore A. In other embodiments, the hardness is between approximately 70 Shore A and approximately 85 Shore A. In some embodiments, the material is sufficiently viscous to flow around the male engagement component and sufficiently elastic to deform when the male engagement component is embedded within it.

In some embodiments, the material of the female engagement component is configured so that, when sufficient pressure is applied, the material flows around the male engagement component to lock the male engagement component into position via friction with respect to the female engagement component ("locked position"). In some embodiments, sufficient pressure is applied by pushing either the weight of the object with which the female engagement component is associated into the male engagement component, or by putting an additional weight onto the connection system. In some cases, sufficient pressure is enough pressure to minimize any voids between the two components and/or maximize the contact area between the two components and is dependent on the material of the female engagement component, the surface design of the two components and/or the speed of the pressure applied.

In some embodiments, the female engagement component is placed on top of the male engagement component and weight/pressure is applied in a substantially vertical direction. In some embodiments, the weight/pressure is applied over a range of approximately 85 degrees to approximately 95 degrees from horizontal. However, the female and male engagement components can be profiled to vary the amount of sufficient pressure, depending on the application with which the components will be used. In some embodiments, such as the context of sporting applications such as a bike shoe engaged with a pedal, it might be desirable to have an approximately 90 degree angle between the female engagement component and the male engagement component. But in other contexts, other angles may be desired, such as but not limited to angles of approximately 45 degrees or approximately 30 degrees, depending on the design and function of the structures/applications with which the components will be used.

When in its locked position, the male engagement component is embedded into the female engagement component and friction generated between the male engagement component and the female engagement component restricts or prevents the male engagement component from slipping, sliding, or shifting in one or more directions with respect to the female engagement component. In some embodiments, the movement is restricted/prevented in a generally horizontal direction. In some embodiments, the movement is restricted/prevented in all non-vertical directions (or all directions except the releasing direction).

The material of the female engagement component is configured so that the material "flows" or "floats" around the male engagement component. In some embodiments, the male engagement component is configured so that the material of the female engagement component follows the outer contour of the male engagement component. When the female engagement component compresses against the male engagement component with sufficient force, the female engagement component deforms around the male engagement component so that the contact area (and thus the friction generated) between the two components is maximized (and in some cases, is minimized or otherwise predetermined).

In some embodiments, the friction is generated as a result of contact between the male engagement component and the material of the female engagement component. In a general non-limiting sense, a male engagement component can be thought of as a base with optionally none, one, or more than one recurring subelements or substructures of similar shape that can vary in size/scale and that help define the direction and flow/stretch that the female engagement component undergoes when it compresses against the male engagement component and any its subelements or substructures. Male engagement components and subelements or substructures of different geometries may have different coefficients of friction, sometimes referred to as individual friction coefficients, and these are not necessarily linear.

As mentioned above, in some embodiments, the female engagement component is an elastomer. The shape and/or configuration and/or geometry of the male engagement component can be designed to maximize or minimize or otherwise predetermine the friction generated between the contact surface of the male engagement component and the female engagement component. In this way, the male engagement component can be designed to predetermine the amount of force/pressure required to engage the male engagement component with the female engagement component and to maintain the engagement.

In some embodiments, the length and/or area and/or profile of the male engagement component, or the base of the male engagement component, is proportionate to the frictional coefficient between the surface of the male engagement component and the female engagement component. In some cases, the length of the portion of the male engagement component that engages with the female engagement component is referred to as the connection length. The male engagement component geometry and profile affects the individual friction coefficient and hence the friction generated by the male engagement component. The potential contact area between the male engagement component and the female engagement component can be adjusted as desired. In some cases, the potential contact area is maximized to increase the coefficient of friction between the two components (in some cases, without regard to scale of the male engagement component) so that more force is required to engage the male and female engagement components into their locked position.

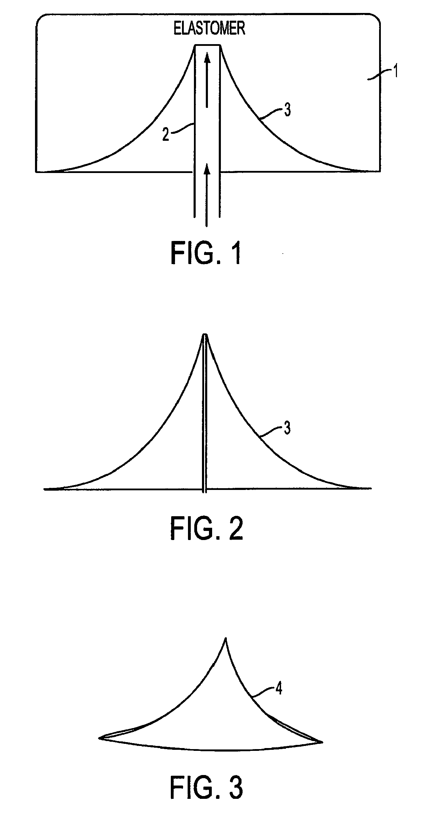

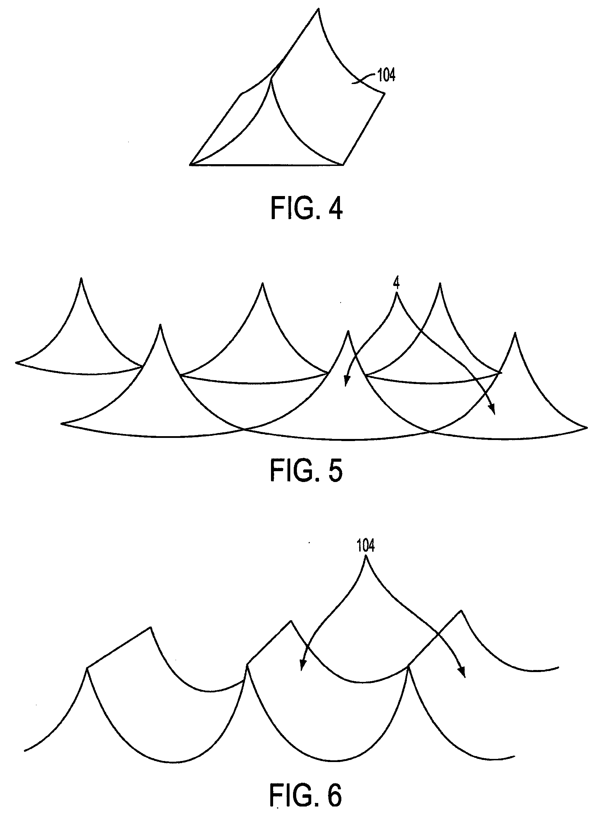

One non-limiting way of designing a male engagement component configured to interact with the material of a female engagement component (such as female engagement component 1 shown in Figure 1) having specific properties is to use an elongate object 2 to apply pressure until the object 2 extends into the material of the female engagement component to a predetermined depth, as shown in Figure 1. In some embodiments, the profile 3 of the void created by the deformation of the female engagement component can be used to create the profile of a male engagement component 4, as shown in Figures 2-3. Figures 4-6 illustrate another male engagement component 104, as well as a plurality of male engagement components 4 and 104, respectively.

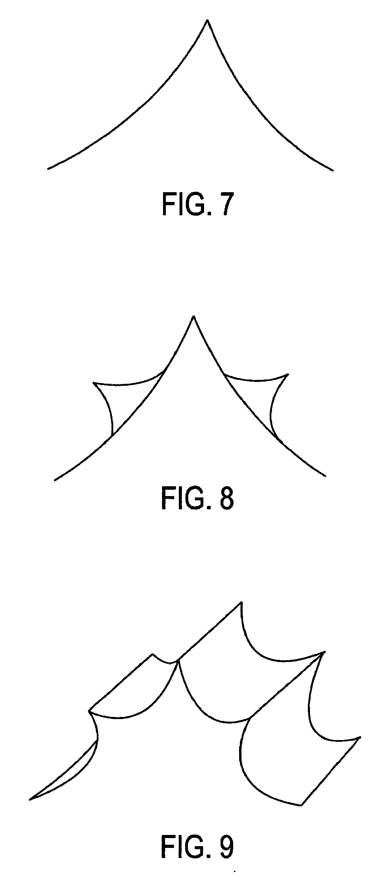

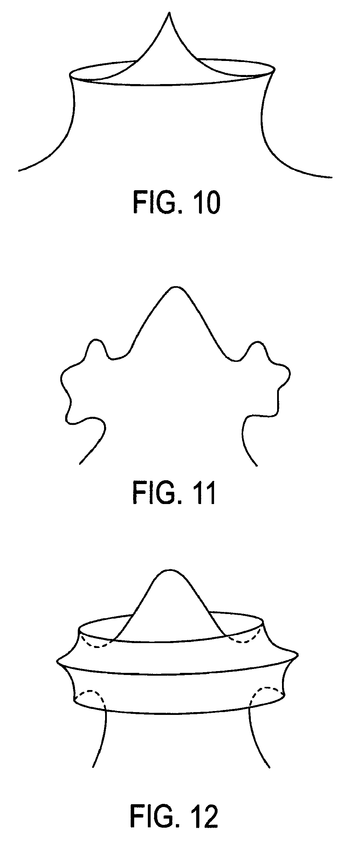

In some embodiments, by designing a male engagement component and subelements or substructures as described above, the material of the female engagement component is capable of stretching to touch the complete surface of the male engagement component and subelements or substructures leaving essentially no voids between the male engagement component and subelements or substructures and the female engagement component. The male engagement components shown in Figures 3-7 and 10 are male engagement components with a "plain" surface without subelements or substructures. Smaller scale subelements or substructures can be added to these male engagement components to create a male engagement component with subelements or substructures, as shown in Figures 8-9. Any number of additional layers of smaller scale subelements or substructures can be added to create two, three, four and more layered male engagement components. Shown in Figures 11-12 are two and three dimensional views of an embodiment of a male engagement component with three layers of subelements or substructures.

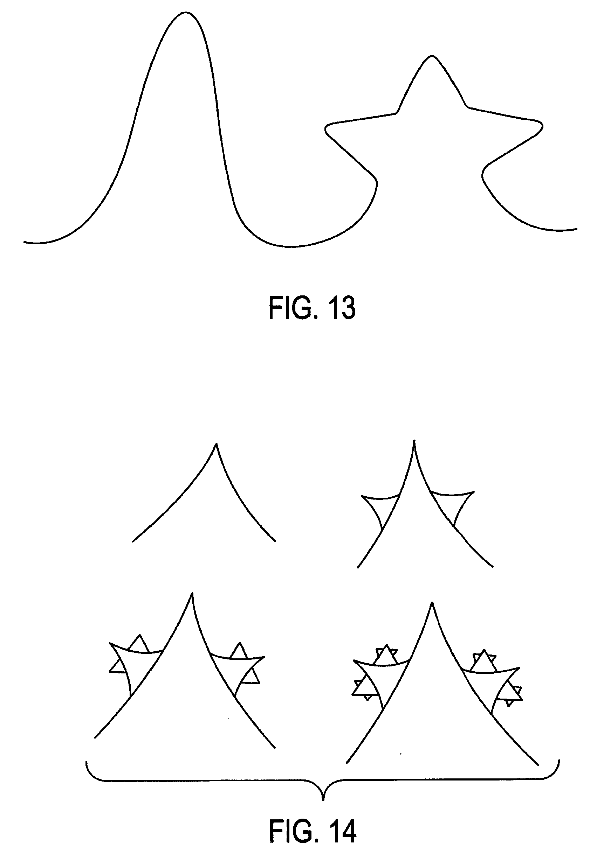

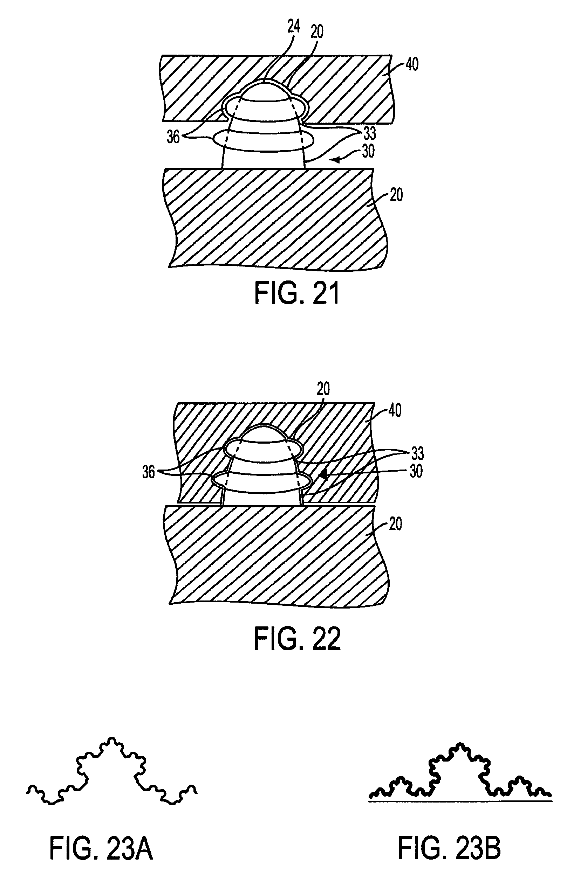

In general, adding smaller scale subelements or substructures to the surface of a larger male engagement component increases the friction generated between the male and female engagement components, so long as it results in higher surface contact area between the two components. Each subsequent layer of subelements or substructures added increases the individual friction coefficient by a corresponding amount. In this way, a "two layer" male engagement component (such as that shown in Figure 9) has a higher coefficient of friction than a male engagement component without subelements or substructures (such as that shown in Figure 4) if the two layer component results in higher surface contact area between the two components. In other words, the force required to embed the male engagement component into the female engagement component is higher with a male engagement component with subelements or substructures that results in a higher surface contact area than with a male engagement component without subelements or substructures, which results in the female engagement component being slower to release from the male engagement component once the sufficient force is no longer applied. Figure 14 illustrates a one layer male engagement component, a two layer male engagement component, a three layer male engagement component, and a four layer male engagement component. In some embodiments, the base with the substructures or subelements in different layers can be a fractal design as seen in some of the figures. In some embodiments, the base with the substructures or subelements in different layers can have a known fractal design, such as but not limited to the Gosper Island fractal, the Fibonacci fractal (shown in Figure 23A), the Koch curve fractal (shown in Figure 23B), the terdragon curve, the Julia set fractal, the Vicsek fractal, the twindragon curve, the three-branches tree fractal, the Sierpinski hexagon fractal, the Von Koch curve or surface, the three-dimensional quadratic Koch surface fractal, and the Von Koch curves with random intervals and random orientations, and/or the cauliflower fractal and numerous other known fractal shapes and profiles. In other embodiments, the male engagement might not have a regular substructure, or may have a combination of substructures and shapes.

The placement of the smaller scaled subelements or substructures along the larger male engagement component or subelements or substructures, and the number of smaller scaled subelements or substructures that are included on the larger male engagement component or subelements or substructures, affect the coefficient of friction and thus the engagement of the female engagement component with the male engagement component. In particular, the static and sliding friction forces generated between the male engagement component and the female engagement component with which the male engagement component and subelements or substructures engages is affected. Moreover, the scale of the smaller subelements or substructures used with the larger male engagement component or subelements or substructures affects the static and sliding friction forces generated between the male engagement component and the female engagement component with which the male engagement component and subelements or substructures interacts.

Although as described it may be desirable to configure the male engagement component to have a high friction coefficient so a greater amount of friction is generated between the female engagement component and the male engagement component and subelements or substructures, the surface percentage stretch generated should not exceed the elastic modulus of the female engagement component. In other words, the coefficient of friction should not be so high that is causes the material of the female engagement component to fail (tear). Instead, the male engagement component should be designed to generate enough surface contact area so that the pressure between the male engagement component surface, including the surface of any subelements or substructures, and the female engagement component surface causes the material of the female engagement component to stretch so that it contacts the entire male engagement component surface and flows around the male engagement component and subelements or substructures to lock the two components in position.

A male engagement component that is shorter but that has more layers of subelements or substructures (i.e., has smaller scale substructures or subelements added to the larger male engagement component or subelements or substructures) has a higher coefficient of friction than a taller (in some embodiments, a greater height to width ratio) one layer male engagement component, so long as this configuration results in higher surface contact area between the two components. As one non-limiting illustration, the male engagement components shown in Figure 13 have a similar individual friction coefficient and thus require approximately the same amount of force to overcome the friction generated and embed them completely into material of a female engagement component.

When a male engagement component first makes contact with the material of a female engagement component, the male engagement component imparts minimal stress and strain to the material. In some embodiments, as the material of the female engagement component begins to stretch and flow around the male engagement component surface, the additional stretching requires additional force to embed the male engagement component into the material of the female engagement component to force the material to flow around the male engagement component surface and move the components into the locked position. To get the material of the female engagement component to flow along the entirety of the male engagement component surfaces, enough pressure must be applied against one or both components to ensure maximum contact between the male engagement components and the surface of the female engagement component.

In some embodiments, the male and female engagement components are in a locked position after the material of the female engagement component surrounds the structure of the male engagement component. To release the connection, a lifting force in one or more directions may be necessary for release, for example if a strong connection is desired. The design of the male engagement component may be adjusted to control the surface contact between the two components and alter the degree of interlock of the male and female engagement components.

When designing the geometry of the male engagement component and choosing the number of male engagement components and subelements and substructures to include with the releasable connection system, the elastomer characteristics of the female engagement component can be taken into account. For example, the pressure applied by each male engagement component and subelements or substructures must be sufficient to stretch the material of the female engagement component so that it substantially contacts the entire male engagement component surface. In this way, the amount of friction force generated between the male engagement component and the female engagement component is influenced by the contact area between the two components.

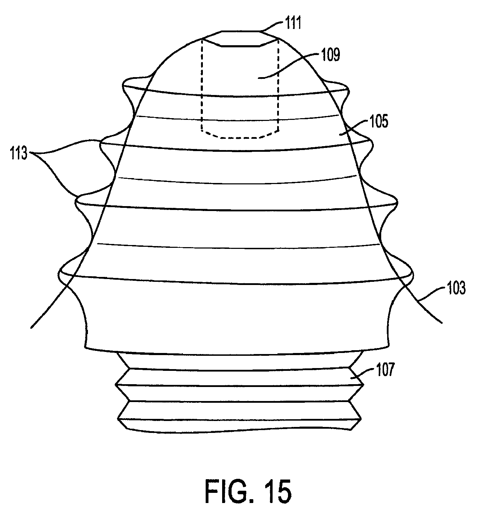

In some embodiments, the male engagement components (which can be configured as male engagement components with or without subelements or substructures) are pins, such as those shown in Figures 15-17. In other embodiments, the male engagement components (which can be configured as male engagement components with or without subelements or substructures) are rails such as those shown in Figures 4, 6, 9, and 18.

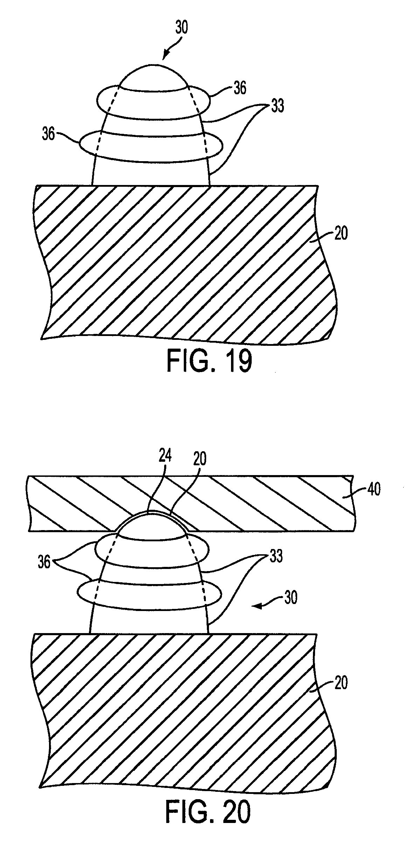

When the disclosed releasable connection system is used in a cycling context, the male engagement components may be pins (such as pin 30 shown in Figures 19-22) or other projections that are positioned on the surface of a pedal (such as pedal 20 shown in Figures 19-22), while the female engagement component may consist of the outsole of a shoe, or vice versa. In some cases, it is desirable that the male engagement component be designed with regard to the material characteristics of the female engagement component such that the friction generated between the two components is optimized.

When used in the cycling context, the geometry and size of the male engagement components (pins) dictates how many male engagement components (pins) will be placed on a pedal of a bike. In some embodiments, only one pin is positioned on a pedal, although any number of pins, such as between 12-24 pins or any other suitable number, may be used. The number of pins used on a pedal can provide different performance characteristics. For example, a bigger pin, e.g., with a round diameter, might be used on a pedal designed for average (non-professional, but frequent) use so that the connection between the pin and the female engagement component is maintained while allowing the foot to rotate to positions of less stress minimizing the potential for injury to the knees and ankles and other body parts while going downhill and/or while the foot is rotated with respect to the pedal. In one embodiment, several pins might be located in a circular arrangement along one or more areas of the pedal. In some embodiments, the one or more areas might be placed on a rotatable insert on the pedal, or the pins may be designed so the female engagement component is capable of rotating when connected to the pin(s). In some cases, the female engagement component (the outsole of the shoe in some embodiments) is fixed to the pins of the pedal but is still moveable (and in some cases rotatable) so that the position of the shoe can be adjusted on the pedal. In this way, the number of pins, as well as the configuration of the pins, used with a pedal can alter the friction/rotation properties of the connection system.

In some embodiments, pins used in a cycling context are between approximately 1 and 15 mm tall, although the pins may have any suitable dimensions. In some embodiments, the pins are between 4 mm and 10 mm tall. The pins may be of uniform size and shape or may be irregular. In some cases, several different pins may be placed on a pedal in regular or irregular distances. The pins may be symmetrical or asymmetrical. In some cases, pins are microstructures with heights of less than 1 mm. The pins and/or the pedal may be metal, or any synthetic material or other durable material such as renewable natural materials. The pins may be placed on one or more areas of the pedal or positioned over substantially the entire contact surface of the pedal.

The male engagement component 105 shown in Figure 15 is a pin with a regular substructure having a profile that generally follows contour 103. Similarly, the pin 30 shown in Figures 19-22 has a profile that generally follows a contour 33. The substructure (such as substructure 113 or substructure 36) is positioned on top of contour (such as contour 103 or contour 33) such that it pushes into the material of the female engagement component (such as the female engagement component 40 shown in Figure 20).

Specifically, when the male engagement component (in some cases, the pin 30 of Figure 20) contacts the female engagement component (such as the female engagement component 40 in Figure 20), a void 20 is created in the material of the female engagement component as shown in Figure 20. The void follows the shape of the male engagement component (in some cases, the pin), especially the tip 24 of the shape of the male engagement component. As the male engagement component (in some embodiments, pin 30) embeds into the material of the female engagement component, the void 20 enlarges and follows not only the tip 24, but begins to follow the profile of the rest of the male engagement component such as the contour 33 and/or the subelements or substructures 36, as shown in Figure 21. Because the subelements or substructures (such as substructures 36) of the male engagement component sit on top of the contour 33 along portions of the contour 33, the subelements or substructures 36 are able to push into the material of the female engagement component and the material flows into the one or more subelements or substructures, as also shown in Figure 21, and increases the strength of the connection between the male and female engagement components. Once the male engagement component (such as pin 30) embeds substantially into the material of the female engagement component (such as female engagement component 40) and the void 20 substantially follows the profile of the male engagement component created by the contour 33 and the subelements/substructures 36, the connection between the female and male engagement components is locked, as shown in Figure 22.

As shown for example in Figure 15, the base of the male engagement component 105 may comprise threads 107 configured to engage with a recess of a pedal and attach the male engagement component to the pedal. Threads 107 may be made of metal or a hard plastic. In this particular embodiment, male engagement component 105 includes a recess 109. Recess 109 is configured to receive a tool, such as a hex-shaped tool, to assist with installation of the pin on the pedal from the top or bottom. In other embodiments, the male engagement component is molded onto the pedal, adhered onto the pedal, or attached by any other suitable means.

If more than one male engagement component is used, the male engagement components may be positioned at any suitable distance from one another along the pedal. Moreover, the male engagement components may have any suitable shape and be of any suitable size and profile, or any combination of shapes and sizes and profiles. Some non-limiting examples of materials that may be used to form the male engagement component include plastics, metals, rubber, carbon, nylon, or other light-weighted materials. A single pedal may include male engagement components made of different materials.

In some embodiments, the male engagement components (such as the pins) may be screwed or otherwise affixed (such as by clips or other mechanical means or glued or otherwise adhered) to the pedal, or may be an integral part of the pedal. In some embodiments, the pins may be individually placed on the pedal.

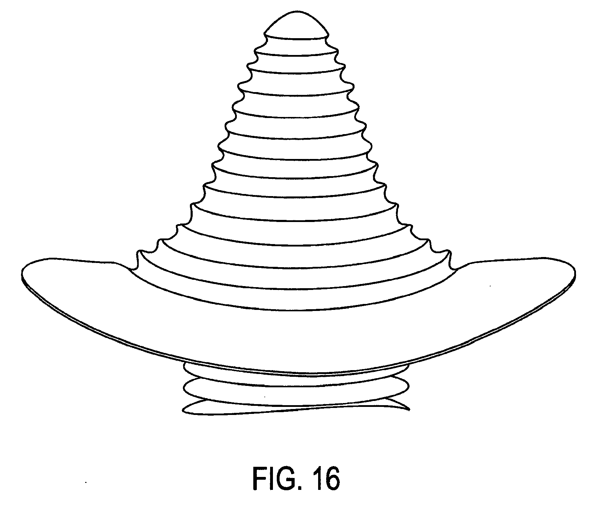

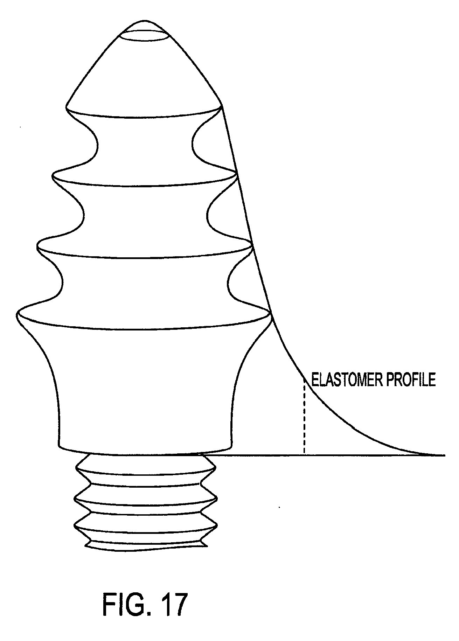

The male engagement components shown in Figures 15 and 17 have a generally cylindrical shape. The tip 111 of the male engagement component may be rounded (as shown in Figure 15) or sharper (as shown in Figure 16), pointed, or may be substantially flat. The edges 113 of the male engagement component (which in some cases are smaller scaled subelements or substructures) may be straight, curved, or waved. These edges may be uniform, sloped, tapered, or have any suitable configuration. The profile of the male engagement component may be rounded, elliptical, concave, convex, pyramid-shaped, cone-shaped, ring-like, mushroom/umbrella-shaped, or crown-shaped. In some embodiments, the male engagement component has a middle part that is broadened and in other embodiments, the male engagement component has a tip that is broadened when compared to the rest of the structure. The cross-section of the tip may be cylindrical, square, oval, triangular, hexagonal, or have any suitable shape.

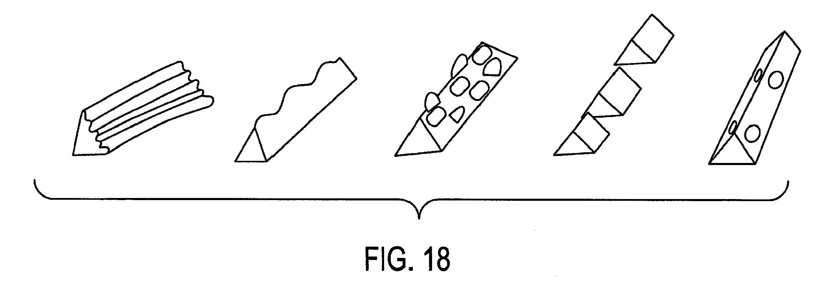

Instead of a pin, the male engagement components may be undercuts or rails (as shown in Figure 18). Instead of multiple rails, the male engagement component may be a single elongate rail as pictured in some of the embodiments of Figure 18. The rails may be oriented in any suitable way along a pedal, such as laterally along the pedal or oriented in a circular fashion along the pedal. If oriented in a circular fashion, the rails may make up a rotatable area along the pedal so that the foot may be rotated and still capable of engaging the rails.

In some embodiments, as detailed above, the male engagement components are configured so that they generate a suitable amount of friction between themselves and the female engagement component in which they are capable of embedding to releasably attach one item to another, such as an outsole of a shoe to a pedal. In the context of shoes, sufficient pressure to embed the male engagement components within the female engagement component may be defined by weight applied to the connection system by the person wearing the shoe. For example, the pressure may vary from approximately 20 to approximately 150 kilograms, depending on the age, gender, and body type of the user.

The coefficient of friction generated between the male engagement components and the female engagement component determines how quickly the components decouple from one another once force is no longer applied to embed the male engagement component within the female engagement component (and in some cases, a second force is applied in one or more directions). In some cases, if the rebound speed of the material of the female engagement component is slower than the speed of the second force (which, in some cases, is a lifting force), the second force is a positive force applied to the pedal; if the rebound speed of the material of the female engagement component is faster than the second force (which, in some cases is a lifting force), the second force is a negative force applied to the pedal.

Once the male engagement components have embedded within the female engagement component, the friction generated between the two components locks the outsole of the shoe in position and restricts it from moving in a generally horizontal direction H as well as any diagonal directions. Locking the outsole of the shoe in the non-vertical directions when the male engagement components are embedded within the female engagement component prevents the outsole from slipping off the pedal. Moreover, connecting the outsole with the pedal allows the cyclist to apply power during the entire pedaling cycle.

In some embodiment, the female engagement component (such as the material of the outsole of the shoe in some embodiments) is designed to have a substantially flat surface or to have a substantially flat surface in areas that are in contact with the male engagement component. In the context of shoes, the outsole may have no tread pattern, or areas with no tread pattern.

Because of the properties of the female and male engagement components and the amount of friction generated between the components, the disclosed connection system allows a cyclist to unlock/disengage the connection between the female engagement component and the male engagement components by releasing the pressure imparted on the pedal in a generally vertical direction (and in some cases, applying a sufficient force in a desired direction, such as generally upward). The extent to which the female engagement component flows around the male engagement component and how quickly it disengages from the male engagement component depends on the shape and configuration of the male engagement component and the recovery speed of the material of the female engagement component, as described above.

The dimensions and shape of the male engagement component will vary depending on the application with which it will be used. For example, a male engagement component to be used within a truck will likely be thicker and longer than one to be used with a bike pedal. The male engagement component may project relative to the structure with which it is used in any suitable manner, such as generally vertically, generally horizontally, or at any suitable angle. In some embodiments, the male engagement component projects at an approximately 90 degree angle relative to the female engagement component and/or the male engagement component, although they may project at any suitable angle. If more than one male engagement component is provided, the more than one engagement components may be provided substantially parallel to the others, in some cases regardless of the shape/configuration of the structure from which it projects.

In one non-limiting application, a portion of a top surface of a transporting vehicle such as a plane, automobile, truck, ship, forklift, flooring component, etc. may include one or more male engagement components or one or more female engagement components. Likewise, a bottom surface of a container or box or rack for housing goods or the like may include the other of the male and female engagement components. The one or more male engagement components interact with the female engagement component as described throughout this disclosure to releasably connect the two objects. If desired, the top surface of the objects may have pins, protrusions, or other suitable structure positioned to interact with a female engagement component of another object to stabilize the objects during stacking of the objects on top of one another.

The foregoing is provided for purposes of illustrating, explaining, and describing embodiments of the present invention. The foregoing is not limited to use with shoes or with cycling shoes, but may be used in many other applications as described above. Further modifications and adaptations to these embodiments will be apparent to those skilled in the art and may be made without departing from the scope or spirit of the invention. Different arrangements of the components depicted in the drawings or described above, as well as components and steps not shown or described are possible. Similarly, some features and subcombinations are useful and may be employed without reference to other features and subcombinations. Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications can be made without departing from the scope of the claims below.

In the following, further examples are described to facilitate the understanding of the invention:
1. A system comprising: a first device having a female engagement component comprising a material with a rebound elasticity that is less than approximately 20% and an elongation of more than approximately 600%; and a second device having at least one male engagement component configured to generate a predetermined amount of friction when in contact with the female engagement component, wherein the first device is capable of embedding within the material of the female engagement component to releasably attach the first device to the second device when sufficient pressure is applied to overcome the predetermined amount of friction.
2. The system of example 1, wherein the at least one male engagement component is configured so that the material of the female engagement component flows or floats around the at least one male engagement component when the sufficient pressure is applied.
3. The system of example 1, wherein the predetermined amount of friction is selected to maximize a contact area between the female engagement component and the at least one male engagement component.
4. The system of example 1, wherein the at least one male engagement component comprises a base having a first size and a shape and further comprises at least one additional subelement or substructure that projects from the base and that is smaller than the first size and that is substantially the same shape as the base.
5. The system of example 1, wherein the at least one subelement or substructure of the male engagement component comprises a plurality of subelements or substructures.
6. The system of example 1, wherein the pressure is applied between the engagement components of the two devices.
7. The system of example 1, wherein the first device is an outsole of a shoe and the second device is a pin on a pedal.
8. The system of example 1, wherein the first device is a storable good.
9. The system of example 1, wherein the first device is a transportable good.
10. A pedal comprising at least one pin that is capable of embedding within a material of a generally flat section of an outsole to releasably attach the pedal to the outsole, wherein the at least one pin comprises a base having a first size and a shape and further comprises at least one substructure or subelement that projects from the base and that is smaller than the first size and that is substantially the same shape as the base.
11. The pedal of example 10, wherein friction generated between the at least one pin and the material of the generally flat section when the at least one pin is embedded within the material fixes a relative position of the pedal and the outsole when the outsole applies pressure to the pedal.
12. The pedal of example 10, wherein the at least one pin is configured so that the material flows or floats around it when the generally flat region contacts the pins and pressure is applied so the at least one pin embeds within the material.
13. The pedal of example 10, wherein the attachment between the pedal and the outsole is releasable in a substantially vertical direction.
14. The pedal of example 12, wherein the generated friction restricts or prevents the at least one pin from slipping, sliding, or shifting in one or more directions with respect to the generally flat surface.
15. A method of designing a male engagement component for engagement with a female engagement component made of a deformable material comprising: (1) applying pressure to the female engagement component using an elongate object until the object extends into the material of the female engagement component to a predetermined depth so that the material deforms around the object to create a void; (2) creating a profile for the male engagement component that follows a profile of the void; and (3) adding subelements or substructures to the male engagement component that are smaller-sized versions of the profile until the engagement of the male engagement component with the female engagement component produces a desired coefficient of friction.
16. The method of example 15, wherein the desired coefficient of friction is such that the material of the female engagement component flows or floats around the male engagement component when sufficient pressure is applied to overcome the desired coefficient of friction.
17. The method of example 15, wherein the desired coefficient of friction is such that the material of the female engagement component stretches to substantially touch outer surfaces of the male engagement component.
18. The method of example 15, further comprising attaching the at least one male engagement component with a pedal.
19. The method of example 15, further comprising incorporating the material of the female engagement component into an outsole of a shoe.
20. A pin designed according to the method of example 15.
21. A pin designed according to the method of example 16.
22. A pin for a bike pedal, wherein the at least one pin comprises a base having a first size and a first shape and further comprises at least one substructure or subelement that projects from the base and that is smaller than the first size.
23. The pin of example 22, wherein the at least one substructure or subelement has a shape that is substantially the same as the first shape of the base.
24. The pin of example 22, wherein the pin is integral with the pedal.
25. The pin of example 22, wherein the pin is a separate component from the pedal and is configured to be attached to the pedal.
26. A system comprising: a first device comprising a female engagement component comprising a material with a rebound elasticity that is less than approximately 20% and an elongation of more than approximately 600%; and a second device comprising at least one male engagement component having a base shape, wherein a top of the base shape has a curvature, wherein, when the at least one male engagement component contacts the material of the female engagement component, the top of the base shape creates a void in the material.
27. The system of example 26, wherein the void is curved to follow the curvature of the top of the base shape when the male engagement component is pressed into the material of the female engagement component.
28. The system of example 26, wherein the male engagement component comprises at least one substructure or subelement.
29. The system of example 28, wherein the at least one substructure or subelements is positioned on the male engagement component along a contour of the male engagement component.
30. The system of example 28, wherein the void is curved to follow the curvature of the top of the base shape and a profile of the at least one substructure or subelement when the male engagement component is pressed into the material of the female engagement component.
31. The system of example 26, wherein the at least one male engagement component is configured to generate a predetermined amount of friction between the male engagement component and the female engagement component when the two are in contact.
32. The system of example 26, wherein a geometry of the at least one male engagement component is selected to generate the predetermined amount of friction.

## Claims

1. A system comprising:
a first device comprising a female engagement component (40) comprising a material with a rebound elasticity that is less than approximately 20% and an elongation of more than approximately 600%; and
a second device comprising at least one male engagement component (30; 105) having a base shape, wherein a top of the base shape has a curvature,
wherein, when the at least one male engagement component (30; 105) contacts the material of the female engagement component (40), the top of the base shape creates a void in the material.

2. The system of claim 1, wherein the male engagement component comprises at least one substructure or subelement.

3. The system of claim 2, wherein the at least one substructure or subelements is positioned on the male engagement component along a contour of the male engagement component.

4. The system of claim 2, wherein the void is curved to follow the curvature of the top of the base shape and a profile of the at least one substructure or subelement when the male engagement component is pressed into the material of the female engagement component.

5. The system of claim 1, wherein the at least one male engagement component is configured to generate a predetermined amount of friction between the male engagement component and the female engagement component when the two are in contact.

6. The system of claim 5, wherein a geometry of the at least one male engagement component is selected to generate the predetermined amount of friction.

7. The system of one of claims 5 - 6, wherein the first device is capable of embedding within the material of the female engagement component to releasably attach the first device to the second device when sufficient pressure is applied to overcome the predetermined amount of friction.

8. The system of claim 7, wherein the predetermined amount of friction is selected to maximize a contact area between the female engagement component and the at least one male engagement component.

9. The system of claim 7, wherein the at least one male engagement component comprises a base having a first size and the base shape and wherein the at least one additional subelement or substructure projects from the base and is smaller than the first size and is substantially the same shape as the base.

10. The system of claim 7, wherein the first device is an outsole of a shoe and the second device is a pin on a pedal.

11. A pedal comprising at least one pin (30; 105) that is capable of embedding within a material of a generally flat section of an outsole to releasably attach the pedal to the outsole,
wherein the at least one pin (30; 105) comprises a base having a first size and a base shape and further comprises at least one substructure or subelement that projects from the base and that is smaller than the first size and that is substantially the same shape as the base.

12. A pin (30; 105) for a bike pedal, wherein the at least one pin (30; 105) comprises a base having a first size and a base shape and further comprises at least one substructure or subelement that projects from the base and that is smaller than the first size.

13. The pin of claim 12, wherein the at least one substructure or subelement has a shape that is substantially the same as the base shape of the base.

14. The pin of claim 12, wherein the pin is integral with the pedal.

15. The pin of claim 12, wherein the pin is a separate component from the pedal and is configured to be attached to the pedal.
